# EUROPÄISCHE PATENTSCHRIFT

(11) **EP 1 941 480 B1**
(45) Veröffentlichungstag und Bekanntmachung des Hinweises auf die Patenterteilung: **18.11.2009**
(21) Anmeldenummer: 06793319.2
(22) Anmeldetag: 07.09.2006
(51) Int. Cl.: G08G 1/09, B60Q 1/52, B62D 15/02

(54) **VERFAHREN UND SYSTEM ZUR UNTERSTÜTZUNG DES FAHRERS EINES KRAFTFAHRZEUGS BEI DER ERKENNUNG DER UMGEBUNG DES KRAFTFAHRZEUGS**
METHOD AND SYSTEM FOR ASSISTING A MOTOR VEHICLE DRIVER TO RECOGNISE THE ENVIRONMENT OF SAID MOTOR VEHICLE
PROCEDE ET SYSTEME POUR ASSISTER LE CONDUCTEUR D'UN VEHICULE AUTOMOBILE DANS LA RECONNAISSANCE DE L'ENVIRONNEMENT DU VEHICULE AUTOMOBILE

(30) Priorität: 10.10.2005 DE 102005048336
(43) Veröffentlichungstag der Anmeldung: 09.07.2008
(73) Patentinhaber: ROBERT BOSCH GMBH, 70442 Stuttgart (DE)
(72) Erfinder: KNEE, Werner, 73728 Esslingen (DE); RENDER, Ralf, 71229 Leonberg (DE); STUMBER, Tobias, 71277 Rutesheim (DE)
(86) Internationale Anmeldenummer: PCT/EP2006/066123
(87) Internationale Veröffentlichungsnummer: WO 2007/042360

(56) Entgegenhaltungen:
- EP-A2- 1 130 906
- EP-A2- 1 442 962

## Beschreibung

### Stand der Technik

Die vorliegende Erfindung betrifft ein Verfahren zur Unterstützung des Fahrers eines Kraftfahrzeugs bei der Erkennung der Umgebung des Kraftfahrzeugs, wobei mittels einer Bildsensoreinheit die Umgebung des Kraftfahrzeugs optisch aufgenommen wird und von einer Steuereinheit graphische Zusatzinformationen erzeugt und/oder aus einem Speichermittel abgerufen werden, und wobei sowohl die aufgenommenen Umgebungsdaten als auch die graphischen Zusatzinformationen in einer Anzeigeeinheit optisch dargestellt werden.

Zur Unterstützung der Fahrer von Kraftfahrzeugen ist es bekannt, videobasierte Fahrerassistenzsysteme einzusetzen, die in einem Display von einer Kamera aufgenommene Bilder anzeigen. Auf diese Weise kann der Fahrer zum Beispiel mit einem Rückfahrkamerasystem bei einem rückwärts ausgeführten Einparkvorgang in der Erkennung von Parklückenbegrenzungen oder Hindernissen unterstützt werden. Durch den Einsatz von infrarotempfindlichen Bildsensoren, beispielsweise gemäß der WO 2004/047449 A1, kann der Fahrer im Rahmen sogenannter Nightview-Systeme auch bei schlechten Sichtverhältnissen oder Wetterbedingungen wirkungsvoll unterstützt werden.

Die gattungsbildende EP 1442962 A2 lehrt, für einen Parkassistenten auf einer Anzeigeeinheit neben dem durch eine Kamera aufgenommenen Parkszenario Hilfslinien darzustellen und ggf. zusätzlich eine (von den Linien begrenzte) Flache - nicht jedoch die Linien selber - halbtransparent darzustellen.

Um den Fahrer bei derartigen Assistenzsystemen noch weiter zu unterstützen ist es ebenfalls bekannt, zusätzliche Informationen zu erzeugen oder abzurufen und diese ergänzend in die von der Bildsensoreinheit aufgenommenen und in der Anzeigeeinheit dargestellten Bilder einzuzeichnen. So können beispielsweise bei einem Nighview-System mit integrierter Fahrspurerkennung die Fahrspur des Fahrzeugs oder bei einem Rückfahrkamerasystem Hilfslinien zur Erleichterung des Einparkvorgangs als zusätzliche Informationen ebenfalls in der Anzeigeeinheit optisch dargestellt werden. Auch können Symbole oder Texte als Zusatzinformationen erzeugt und angezeigt werden. Dabei werden stets künstlich erzeugte graphische Daten gleichzeitig mit den aufgenommenen Bildern der reellen Umgebung des Fahrzeugs in einer Anzeigeeinheit dargestellt. Als Anzeigeeinheit kann vorzugsweise ein Display oder Monitor dienen.

Bei den bekannten Systemen erfolgt die Darstellung der graphischen Zusatzinformationen durch einfaches Überzeichnen der Bildpunkte des von der Kamera oder von der Bildsensoreinheit aufgenommenen Bildes. Die ursprünglich aufgenommen Bilddaten werden hierbei mit den Daten der darzustellenden Zusatzinformationen überzeichnet, so dass ein Teil der aufgenommenen Umgebungsdaten verdeckt wird.

Die der vorliegenden Erfindung zugrundeliegende Problematik besteht also allgemein darin, ein verbessertes Verfahren bzw. Fahrerassistenzsystem der eingangs genannten Art zu schaffen, bei dem die Zusatzinformationen gut erkennbar sind und gleichzeitig möglichst wenig vom aufgenommenen Umgebungsbild verdecken und ablenken, so dass der Fahrer möglichst optimal unterstützt wird.

### Vorteile der Erfindung

Das erfindungsgemäße Verfahren gemäß Anspruch 1 weist gegenüber den bekannten Verfahren und Systemen den Vorteil auf, dass die eigentlichen Bildinformationen nicht von den Zusatzinformationen verdeckt werden und die graphischen Zusatzinformationen dennoch in beliebiger Größe in der Anzeigeeinheit optisch dargestellt werden können. Deshalb ist eine gute Erkennbarkeit sowohl der aufgenommenen Umgebungsdaten als auch der Zusatzinformationen gegeben, was zu einer besonders wirkungsvollen Unterstützung des Fahrers führt.

Die der vorliegenden Erfindung zugrundeliegende Idee besteht darin, dass die graphischen Zusatzinformationen und/oder die erfassten Umgebungsdaten halbtransparent in der Anzeigeeinheit dargestellt werden, wobei deren Transparenzgrad variiert werden kann.

Auf diese Weise können die aufgenommenen Umgebungsdaten und die graphischen Zusatzinformationen vollständig angezeigt werden, ohne dass bestimmte Bereiche der darzustellenden Daten vollständig verdeckt und für den Fahrer nicht zu erkennen sind. Der Fahrer kann daher von beiden in der Anzeigeeinheit dargestellten Informationen in vollem Umfang profitieren, so dass eine optimale Unterstützung gewährleistet ist.

Vorteilhafte Weiterbildungen und Verbesserungen des erfindungsgemäßen Verfahrens ergeben sich aus den abhängigen Ansprüchen.

So ist es besonders vorteilhaft, wenn die graphischen Zusatzinformationen den erfassten Umgebungsdaten in halbtransparenter Weise überlagert werden. Dadurch sind auch die Bereiche des von der Bildsensoreinheit aufgenommenen Umgebungsbildes sichtbar, die bei den herkömmlichen Systemen von den dargestellten Zusatzinformationen verdeckt werden.

Gemäß der Erfindung ist vorgesehen, dass die graphischen Zusatzinformationen den erfassten Umgebungsdaten zu einem variablen Teil überlagert werden. Auf diese Weise kann der Transparenzgrad variiert und an verschiedene Bedingungen oder Bedürfnisse angepasst werden.

Dabei kann nach einer ersten erfindungsgemäßen Variante der variable Teil der zu überlagernden graphische Zusatzinformationen wahlweise vorgegeben werden. Hierdurch hat der Fahrer die Möglichkeit das System nach seinen Wünschen und Vorlieben zu konfigurieren.

Nach einer zweiten Ausführungsform kann vorgesehen sein, dass mindestens ein vorbestimmter Parameter des Zustandes des Kraftfahrzeugs erfasst wird und dass der variable Teil der zu überlagernden graphischen Zusatzinformationen in Abhängigkeit von dem mindestens einen Parameterwert variiert. Der Transparenzgrad der überlagerten Zusatzinformationen kann so an bestimmte Fahrbedingungen des Kraftfahrzeugs, vorzugsweise an die momentane Geschwindigkeit und/oder an die Beschleunigung bzw. Verzögerung des Kraftfahrzeugs und/oder an den momentanen Lenkwinkel des Fahrzeugs, angepasst werden. Beispielsweise können Hilfslinien bei einem Rückwärtseinparkvorgang stärker sichtbar dem Bild der Umgebung hinter dem Fahrzeug überlagert werden, wenn das Lenkrad stärker eingeschlagen ist, bzw. die Hilfslinien können mit einem höheren Transparenzgrad weniger stark sichtbar überlagert werden, wenn ein geringerer Lenkwinkel eingestellt ist.

Gemäß einer weiteren Ausführungsvariante kann ebenfalls vorgesehen sein, dass mindestens ein vorbestimmter Parameter der Umgebung, beispielsweise die Art der momentan befahren Straße, oder des Zustandes der Umgebung, insbesondere die Helligkeit der Umgebung, erfasst wird und dass der variable Teil der zu überlagernden graphischen Zusatzinformationen in Abhängigkeit von dem mindestens einen Parameterwert variiert. So kann zum Beispiel der Transparenzgrad der überlagerten Bildinhalte, auf Autobahnen anders ausgelegt sein als bei der Fahrt innerhalb einer geschlossenen Ortschaft. Auch besteht die Möglichkeit, den Grad der Transparenz der zu überlagernden graphischen Zusatzinformationen mit abnehmender Helligkeit zu steigern, d.h. diese Daten werden weniger stark sichtbar angezeigt, um die Darstellung des aufgenommenen Umgebungsbildes zu verbessern, wohingegen mit zunehmender Helligkeit der Umgebung die graphischen Zusatzinformationen stärker betont werden, um ihre Erkennbarkeit zu steigern.

Besonders vorteilhaft ist es ferner, wenn die einander zu überlagernden Bildinhalte der graphischen Zusatzinformationen und der erfassten Umgebungsdaten jeweils mit einem Faktor gewichtet werden und die so gewichteten Bildinhalte vor der Darstellung in der Anzeigeeinheit in einer Anzeigensteuerung aufaddiert werden. Auf diese Weise ist die Variation des überlagerten Teils von Daten besonders einfach durchführbar.

Die Darstellung der Bilddaten in der Anzeigeeinheit kann vorzugsweise in einer Pixel-Matrix erfolgen, wobei in den Bildbereichen, in denen einander überlagert werden, die Pixel der graphischen Zusatzinformationen und die Pixel der erfassten Umgebungsdaten in einem dem Transparenzgrad oder dem gegebenenfalls gebildeten Gewichtungsfaktor entsprechenden relativen Mengenverhältnis dargestellt werden. Dabei werden die Pixel der beiden einander zu überlagernden Bilder vorteilhafterweise möglichst gleichmäßig verteilt, um einen gleichmäßige Erkennbarkeit in dem gewünschten Transparenzgrad zu erhalten. Bei einer halbtransparenten Darstellung mit einem Transparenzgrad von 50% können beispielsweise die Pixel der erfassten Umgebungsdaten und die Pixel der graphischen Zusatzinformationen schachbrettartig abwechselnd angezeigt werden.

Besonders günstig ist es, wenn die Steuereinheit ein Modul umfasst, das als Programm eines Mikroprozessors ausgestaltet ist. Insofern ist Gegenstand der vorliegenden Erfindung auch ein Computerprogramm mit Programmcode-Mitteln, um die Schritte des Verfahrens nach einem der vorherigen Ansprüche durchzuführen, wenn das Programm auf einem Computer ausgeführt wird.

Die vorliegende Erfindung betrifft darüber hinaus auch ein System, das zur Durchführung des erfindungsgemäßen Verfahrens geeignet ist. Ein derartiges System umfasst vorteilhafterweise Speichermittel, in denen ein das erfindungsgemäße Verfahren ausführendes Computerprogramm speicherbar ist.

Insbesondere umfasst ein dem vorangehend beschriebenen Verfahren entsprechendes Fahrerassistenzsystem eine Bildsensoreinheit, vorzugsweise eine Videokamera, zur optischen Erfassung der Umgebung, eine Steuereinheit zur Erzeugung oder Abrufung graphischer Zusatzinformationen, sowie eine Anzeigeeinheit zur optischen Darstellung der erfassten Umgebungsdaten und der graphischen Zusatzinformationen, wobei die graphischen Zusatzinformationen und/oder die erfassten Umgebungsdaten halb-transparent in der Anzeigeeinheit darstellbar sind. Die graphischen Zusatzinformationen können dabei von der Steuereinheit bei jedem Anwendungsfall neu erzeugt werden und/oder sie können vorab in einem Speichermittel abgespeichert und von der Steuereinheit im Bedarfsfall abgerufen werden.

Über die Anwendung bei herkömmlichen Kraftfahrzeugen hinaus können derartige Systeme insbesondere auch bei Schienen-, Luft- oder Wasserfahrzeugen zum Einsatz kommen.

### Zeichnungen

In den Zeichnungen sind Ausführungsbeispiele der Erfindung dargestellt, die in der nachfolgenden Beschreibung näher erläutert werden. Es zeigen:
Figur 1: Blockschaltbild eines Systems zur Ausführung des erfindungsgemäßen Verfahrens; und
Figur 2: erfindungsgemäße Darstellung von Daten in einem Bildschirm einer Anzeigeeinheit.

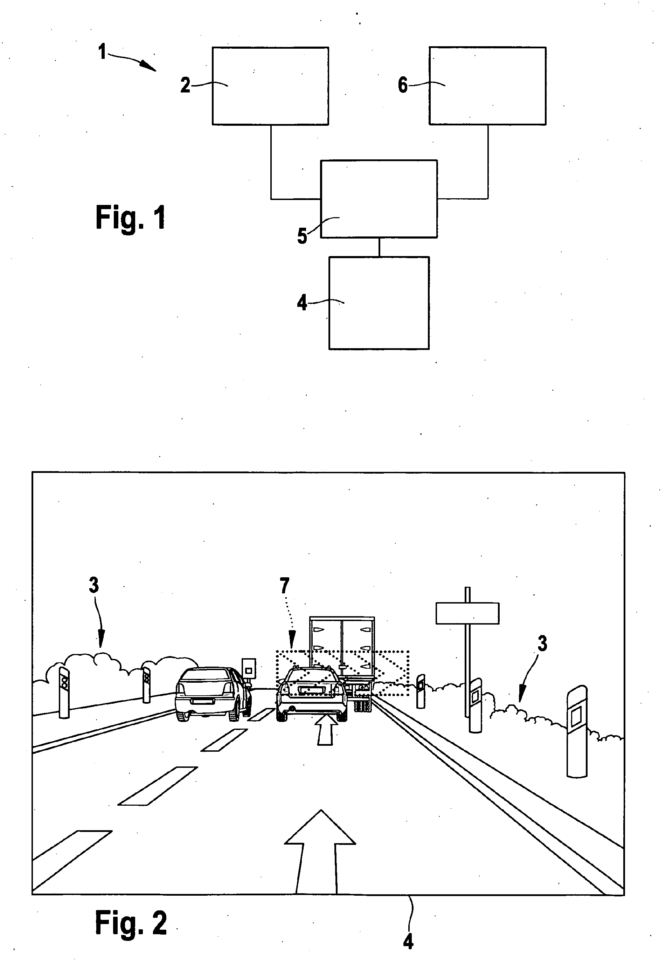

Das in Figur 1 dargestellte und in einem Kraftfahrzeug eingesetzte Fahrerassistenzsystem 1 dient zur Unterstützung des Fahrers bei der Erkennung der Fahrzeugumgebung. Es kann sich hierbei beispielsweise um ein Nighview-System handeln. Es umfasst eine Videokamera 2, mit der die vor dem Fahrzeug befindliche Umgebung 3 optisch erfasst werden kann, sowie als Anzeigeeinheit ein Display 4, auf dem die von der Videokamera 2 erfassten Bilder der Umgebung 3 angezeigt werden können. Das Display 4 wird dabei von einer Steuereinheit 5 gesteuert, welche die von der Videokamera 2 gelieferten Bilddaten ggf. in einer vom Fahrer gewünschten Form bearbeitet und an das Display 4 zur Anzeige weitergibt.

Zusätzlich ist eine Speichereinheit 6 vorgesehen, in der bestimmte Zusatzinformationen abgespeichert sind, die von der Steuereinheit 5 im Bedarfsfall abgerufen und als graphische Zusatzinformationen 7 ebenfalls im Display 4 optisch angezeigt werden können. Beispielsweise können mittels eines an das Fahrerassistenzsystem 1 angeschlossenen Navigationssystems bevorstehende Fahrtrichtungsänderungen erkannt werden und durch entsprechende Symbole als graphische Zusatzinformation 7 im Display 4 dargestellt werden.

Dabei werden die graphischen Zusatzinformationen 7 den von der Videokamera 2 erfassten Umgebungsdaten 3 von der Steuereinheit 5 halbtransparent überlagert, so dass durch die graphischen Zusatzinformationen 7 hindurch im Hintergrund noch das Bild der Umgebung 3 erkennbar ist. Wie in Figur 2 dargestellt sind die graphischen Zusatzinformationen 7, die hier als nach rechts weisende Pfeile auf eine in einiger Entfernung folgende Rechtskurve hinweisen, gut wahrzunehmen, ohne dabei jedoch die Bilder der dahinterliegenden Umgebung 3, hier im wesentlichen zwei vorausfahrende Fahrzeuge, zu verdecken. Auf diese Weise kann der Fahrer besonders wirkungsvoll durch das Fahrerassistenzsystem 1 unterstützt werden.

## Patentansprüche

1. Verfahren zur Unterstützung des Fahrers eines Kraftfahrzeugs bei der Erkennung der Umgebung des Kraftfahrzeugs, wobei das Verfahren mindestens die folgenden Schritte umfasst:
- mittels einer Bildsensoreinheit (2) wird die Umgebung (3) des Kraftfahrzeugs optisch erfasst,
- von einer Steuereinheit (5) werden graphische Zusatzinformationen (7) erzeugt und/oder abgerufen,
- die erfassten Umgebungsdaten (3) und die graphischen Zusatzinformationen (7) werden in einer Anzeigeeinheit (4) optisch dargestellt,
**dadurch gekennzeichnet, dass** die graphischen Zusatzinformationen (7) den erfassten Umgebungsdaten (3) halbtransparent und zu einem variablen Teil überlagert werden und so deren Transparenzgrad variiert werden kann.

2. Verfahren nach Anspruch 1, **dadurch gekennzeichnet, dass** der variable Teil der zu überlagernden graphischen Zusatzinformationen (7) wahlweise vorgegeben werden kann.

3. Verfahren nach Anspruch 1 oder 2, **dadurch gekennzeichnet , dass** mindestens ein vorbestimmter Parameter des Zustandes des Kraftfahrzeugs, insbesondere die momentane Geschwindigkeit und/oder die Beschleunigung bzw. Verzögerung des Kraftfahrzeugs und/oder der momentane Lenkwinkel erfasst wird und dass der variable Teil der zu überlagernden graphischen Zusatzinformationen (7) in Abhängigkeit von dem mindestens einen Parameterwert variiert.

4. Verfahren nach einem der Ansprüche 1 bis 3, **dadurch gekennzeichnet , dass** mindestens ein vorbestimmter Parameter der Kraftfahrzeug-Umgebung oder des Zustandes der Kraftfahrzeug-Umgebung, insbesondere die Helligkeit der Umgebung, erfasst wird und dass der variable Teil der zu überlagernden graphischen Zusatzinformationen (7) in Abhängigkeit von dem mindestens einen Parameterwert variiert.

5. Verfahren nach einem der vorherigen Ansprüche, **dadurch gekennzeichnet, dass** die einander zu überlagernden Bildinhalte der graphischen Zusatzinformationen (7) und der erfassten Umgebungsdaten (3) jeweils mit einem Faktor gewichtet werden und dass die gewichteten Bildinhalte vor der Darstellung aufaddiert werden.

6. Verfahren nach einem der vorherigen Ansprüche, **dadurch gekennzeichnet , dass** die Bilddaten in einer Pixel-Matrix dargestellt werden, wobei in den einander überlagernden Bildbereichen die Pixel der graphischen Zusatzinformationen (7) und die Pixel der erfassten Umgebungsdaten (3) in einem dem Transparenzgrad oder dem gegebenenfalls gebildeten Gewichtungsfaktor entsprechenden relativen Mengenverhältnis, vorzugsweise gleichmäßig verteilt, in der Anzeigeeinheit (4) dargestellt werden.

7. Computerprogramm mit Programmcode-Mitteln, um die Schritte des Verfahrens nach einem der vorherigen Ansprüche durchzuführen, wenn das Programm auf einem Computer ausgeführt wird.

8. Fahrerassistenzsystem (1), insbesondere für Kraftfahrzeuge, umfassend eine Bildsensoreinheit (2) zur optischen Erfassung der Umgebung (3), eine Steuereinheit (5) zur Erzeugung und/oder Abrufung graphischer Zusatzinformationen (7), sowie eine Anzeigeeinheit (4) zur optischen Darstellung der erfassten Umgebungsdaten (3) und der graphischen Zusatzinformationen (7),
**dadurch gekennzeichnet , dass** die graphischen Zusatzinformationen (7) den erfassten Umgebungsdaten (3) halbtransparen und zu einem variablen teil überlagert werden und so deren **Transparenzgrad variiert** werden kann.

## Claims

1. Method for assisting a motor vehicle driver to recognize the surroundings of the motor vehicle, wherein the method comprises at least the following steps:
- the surroundings (3) of the motor vehicle are sensed visually by means of an image sensor unit (2),
- additional graphic information (7) is generated and/or called by a control unit (5),
- the sensed data (3) on the surroundings and the additional graphic information (7) are presented visually in a display unit (4),
**characterized in that** the additional graphic information (7) is superimposed on the sensed data (3) on the surroundings in a semi-transparent fashion to form a variable part, and in this way the degree of transparency of said data (3) on the surroundings can be varied.

2. Method according to Claim 1, **characterized in that** the variable part of the additional graphic information (7) which is to be superimposed can be predefined as desired.

3. Method according to Claim 1 or 2, **characterized in that** at least one predetermined parameter of the state of the motor vehicle, in particular the instantaneous speed and/or the acceleration or deceleration of the motor vehicle and/or the instantaneous steering angle are/is sensed, and **in that** the variable part of the additional graphic information (7) which is to be superimposed varies as a function of the at least one parameter value.

4. Method according to one of Claims 1 to 3, **characterized in that** at least one predetermined parameter of the motor vehicle surroundings or of the state of the motor vehicle surroundings, in particular the brightness of the surroundings, is sensed, and **in that** the variable part of the additional graphic information (7) which is to be superimposed varies as a function of the at least one parameter value.

5. Method according to one of the preceding claims, **characterized in that** the image contents, to be superimposed on one another, of the additional graphic information (7) and of the sensed data (3) on the surroundings are respectively weighted with a factor, and **in that** the weighted image contents are added together before they are displayed.

6. Method according to one of the preceding claims, **characterized in that** the image data are displayed in a pixel matrix, wherein, in the image areas which are superimposed on one another, the pixels of the additional graphic information (7) and the pixels of the sensed data (3) on the surroundings are displayed with a relative quantity ratio which corresponds to the degree of transparency or the possibly formed weighting factor and are preferably distributed uniformly, in the display unit (4).

7. Computer program with program code means for carrying out the steps of the method according to one of the preceding claims when the program is executed on a computer.

8. Driver assistance system (1), in particular for motor vehicles, comprising an image sensor unit (2) for visually sensing the surroundings (3), a control unit (5) for generating and/or calling additional graphic information (7), and a display unit (4) for visually displaying the sensed data (3) on the surroundings and the additional graphic information (7),
**characterized in that** the additional graphic information (7) can be superimposed on the sensed data (3) on the surroundings in a semi-transparent fashion to form a variable part, and in this way the degree of transparency can be varied.

## Revendications

1. Procédé pour assister le conducteur d'un véhicule automobile à saisir l'environnement du véhicule, le procédé comportant au moins les étapes suivantes :
- l'environnement (3) du véhicule est saisi optiquement au moyen d'une unité (2) de détection d'image,
- des informations graphiques supplémentaires (7) sont formées et/ou appelées par une unité de commande (5),
- les données d'environnement (3) saisies et les informations graphiques supplémentaires (7) sont présentées visuellement sur une unité d'affichage (4),
**caractérisé en ce que**
une partie variable des informations graphiques supplémentaires (7) est superposée de manière semi-transparente sur les données d'environnement (3) saisies, leur degré de transparence pouvant être modifié.

2. Procédé selon la revendication 1, **caractérisé en ce que** la partie variable des informations graphiques supplémentaires (7) à superposer peut être prédéterminée sélectivement.

3. Procédé selon les revendications 1 ou 2, **caractérisé en ce qu'**au moins un paramètre prédéterminé de la situation du véhicule, en particulier la vitesse instantanée et/ou l'accélération instantanée ou le ralentissement instantané du véhicule automobile et/ou l'angle instantané d'action sur le volant sont détectés et **en ce que** la partie variable des informations graphiques supplémentaires (7) à superposer est modifiée en fonction de la valeur d'au moins un paramètre.

4. Procédé selon l'une des revendications 1 à 3, **caractérisé en ce qu'**au moins un paramètre prédéterminé de l'environnement du véhicule ou de la situation de l'environnement du véhicule, en particulier la luminosité de l'environnement, est détecté et **en ce que** la partie variable des informations graphiques supplémentaires (7) à superposer est modifiée en fonction de la valeur du ou des paramètres.

5. Procédé selon l'une des revendications précédentes, **caractérisé en ce que** les contenus des informations graphiques supplémentaires (7) et des données d'environnement (3) saisies qu'il faut superposer dans l'image sont pondérés par un facteur et **en ce que** les contenus pondérés de l'image sont additionnés avant leur présentation.

6. Procédé selon l'une des revendications précédentes, **caractérisé en ce que** les données d'image sont présentées dans une matrice de pixels, les pixels des informations graphiques supplémentaires (7) et les pixels des données d'environnement (3) saisies dans les parties d'image à superposer mutuellement étant présentés dans l'unité d'affichage (4) dans un rapport de quantités relatives qui correspond au degré de transparence ou au facteur de pondération éventuellement formé, en étant de préférence répartis de manière uniforme.

7. Programme informatique doté de moyens à code de programme qui exécutent les étapes du procédé selon l'une des revendications précédentes lorsque le programme est exécuté sur un ordinateur.

8. Système (1) d'assistance au conducteur, en particulier de véhicules automobiles, comprenant :
une unité (2) de détection d'image qui saisit optiquement l'environnement (3), une unité de commande (5) qui forme et/ou demande des informations graphiques supplémentaires (7) ainsi qu'une unité d'affichage (4) qui présente visuellement les données d'environnement (3) saisies et les informations graphiques supplémentaires (7), **caractérisé en ce que**
une partie variable des informations graphiques supplémentaires (7) est superposée de manière semi-transparente sur les données d'environnement (3) saisies, leur degré de transparence pouvant être modifié.
